# EUROPEAN PATENT SPECIFICATION

(11) **EP 1 129 808 B1**
(45) Date of publication and mention of the grant of the patent: **14.06.2006**
(21) Application number: 01301810.6
(22) Date of filing: 28.02.2001
(51) Int. Cl.: B23K 9/173

(54) **Consumable electrode gas shielded arc welding method and apparatus**
Verfahren und Vorrichtung zum Lichtbogenschutzgasschweissen mit abschmelzender Elektrode
Méthode et appareil pour le soudage à l'arc avec électrode consommable

(30) Priority: 29.02.2000 JP 2000054973
(43) Date of publication of application: 05.09.2001
(73) Proprietor: Japan as represented by Director General of, Tsukuba-shi, Ibaraki 305-0047 (JP); Daihen Corporation, Osaka-shi, Osaka 532-0027 (JP); NIPPON SANSO CORPORATION, Minato-ku, Tokyo (JP); Ishikawajima-Harima Heavy Industries Co., Ltd., Chiyoda-ku, Tokyo 100 (JP)
(72) Inventor: Nakamura, Terumi, c/o Nat. Res. Inst. for Metals, Tsukuba-shi, Ibaraki (JP); Hiraoka, Kazuo, c/o Nat. Res. Inst. for Metals, Tsukuba-shi, Ibaraki (JP); Shiga, Chiaki, c/o Nat. Res. Inst. for Metals, Tsukuba-shi, Ibaraki (JP); Yamamoto, Hideyuki, c/o Daihen Corporation, Osaka-shi, Osaka (JP); Nakamura, Koji, c/o Nippon Sanso Corporation, Minato-ku, Tokyo (JP)
(74) Representative: Hall, Matthew Benjamin

(56) References cited:
- DE-A- 2 265 065
- US-A- 3 309 491
- US-A- 3 484 575
- US-A- 4 749 841
- US-A- 5 373 139

## Description

The present invention relates to a consumable electrode gas shielded arc welding method and apparatus. More particularly, the present invention relates to a consumable electrode gas shielded arc welding method and apparatus, which realize appropriate arc heat input density distributions in a groove of a base metal and preserve satisfactory toughness of a weld metal.

In order to prevent weld defects such as lack of fusion at the bottom of a groove or formation of convex beads in the groove during root running or multi-layer welding of a very narrow groove of a metal joint, which has a V or Y shape whose groove angle is about 30° or an I or U shape whose clearance is about 5 mm, it is necessary to realize an effective arc heat input density distribution.

A consumable electrode gas shielded arc welding method, which is excellent in efficiency because wide throat thickness is obtained by a single operation, is not exceptional. Strong arc power that can melt the bottom of a groove against an excessively heavy gravity head of molten metal is needed and large electric current is demanded.

The MIG welding which uses an inert gas such as argon for a shielding gas or a mixed gas in which an oxidizing gas such as O₂ from 2 to 5 %, CO₂ of less than 20 % is a main ingredient and the oxidizing gas is added to the inert gas cannot afford such requirement. It is because the MIG welding basically aims current saving and heat input saving and because a condition range which realizes free defect welding of the bottom of a groove is narrow.

On the other hand, the MIG welding is very effective for beads. Stable and fine melting is indispensable for preserving a wetting property at the toe of the beads. The cathode cleaning action in the MIG welding, which is remarkably confirmed in a wide range of the shielding gas, is also effective for stable and fine melting of the toe

The MAG welding which uses an oxidizing gas usually uses Ar + 20%CO₂ for the shielding gas and its condition range in which free defect welding at the bottom of a groove is realized is very narrow. Consequently, CO₂ welding which uses 100%CO₂ is demanded.

In the use of an oxidizing shielding gas, it is, however, known that toughness of weld metal is deteriorated. Because of this, decrease ot mixing ratio of the oxidizing gas such as O₂ and CO₂ is required for preserving sufficient toughness bf the weld metal.

Now, the present invention will become more apparent upon a reading of the following detailed specification and drawings, in which:
Fig. 1 is a schematic view illustrating a consumable electrode gas shielded arc welding method and apparatus of the present invention;
Fig. 2 is a graph which shows a relationship between a CO₂ concentration in a shielding gas at an arc generation region and absorbed energy of a weld metal when a CO₂ gas is added to a shielding gas which is a simple of an Ar gas and a consumable electrode gas shielded arc welding of the present invention is performed;
Fig. 3 is an expanded cross section view illustrating a groove of a base metal, which was used in Example 1;
Figs. 4 (a) to (g) are observation views illustrating a position of a welding wire tip and a behaviour of an arc during welding, respectively;
Figs. 5A and 5B are graphs showing arc currents, arc voltages, voltages between a base metal and a contact tip, and positions of a welding wire tip, respectively; and

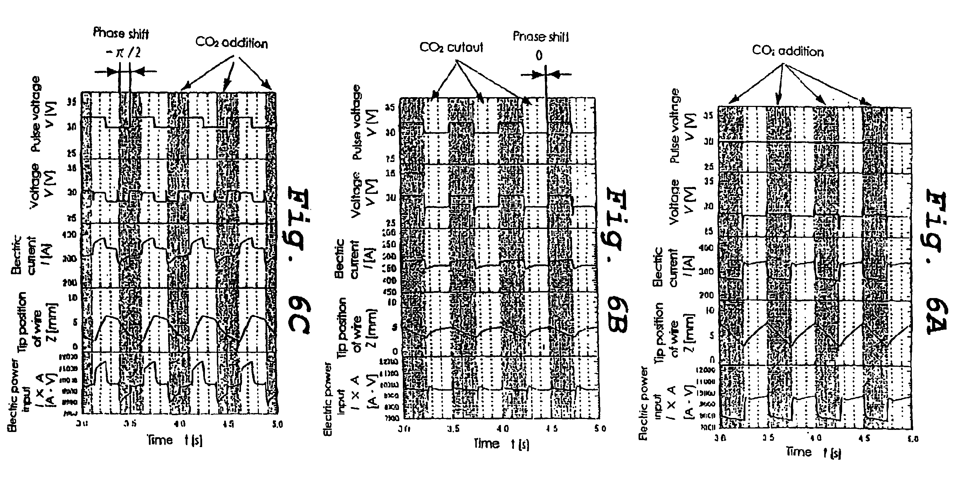

Figs. 6A to 6C are graphs showing voltages of a weld electric power source, arc voltages, arc currents, positions of a welding wire tip and electric power input, in the case where arc welding was performed with no change of a voltage characteristic of a weld electric power source, in the case where arc welding was performed while the voltage characteristic of the weld electric power source was changed by synchronizing and corresponding with CO₂ gas addition, and in the case where arc welding was performed while the voltage characteristic of the welding electric power source was changed by synchronizing with CO₂ gas addition and, on the other hand, by giving a pulse cycle a phase shift of 0.125 seconds against a CO₂ gas addition cycle, respectively.

US-A-3,484,575 describes how arc current can be observed to vary in accordance with changes in shielding gas composition.

US-A-3,309,491 and DE-A-2265065 disclose consumable gas shielded arc welding methods.

According to a broad aspect of the present invention, there is provided a consumable electrode gas shielded arc welding method, comprising the steps of intermittently adding a different kind of a gas in an arc current-voltage characteristic from an shielding gas to said shielding gas, intermittently changing an arc current in proportion to an intermittent chemical composition change of the shielding gas at an arc generation region, and displacing along a groove defined by a base metal an arc generation point situated at a tip of a welding wire toward and away from a bottom of said groove wherein the variation of said arc current is increased or decreased by changing an external characteristic of a weld electric power source in synchronization with the intermittent addition of the different kind of a gas to the shielding gas, thereby increasing or decreasing a displacement amplitude of said arc generation point in said groove

Preferably the shielding gas or said different kind of a gas is an oxidizing gas or a He gas.

According to another broad aspect of the present invention, there is provided a consumable electrode gas shielded arc welding apparatus, comprising a welding torch, a wire supply portion continuously supplying a welding wire to said welding torch, a shielding gas supply portion supplying a shielding gas to said welding torch, a weld electric power source, and a different kind of a gas supply portion which intermittently adds a different kind of a gas in an arc current-voltage characteristic from said shielding gas to the shielding gas, wherein an interface is provided between said weld electric power source and a flow control portion for said different kind of gas which is capable of synchronizing a change in an external characteristic of said weld electric power source with the intermittent addition of said different kind of a gas, which in turn increases or decreases the variation of an arc current and increases or decreases a displacement amplitude of an arc generation point, situated at a tip of said welding wire, when welding in a groove.

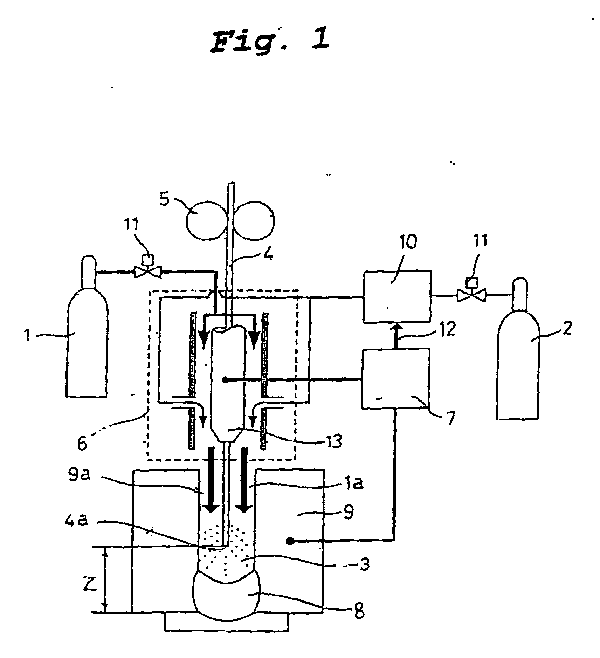

As illustrated in Fig. 1, for example, in the present invention, a different kind of gas (2) in an arc current-voltage characteristic from an shielding gas (1) is intermittently added from a different kind of a gas supply portion to the shield gas (1) supplied from a shielding gas supply portion and a chemical composition of a shielding gas (1a) at an arc (3) generation region is intermittently changed.

Namely, in the present invention, while a welding wire (4) is continuously supplied with a welding torch (6) at a constant rate by a wire supply portion (5), a different kind of a gas (2) is intermittently added to a shielding gas (1) and a chemical composition of a shielding gas (1a) is intermittently changed at an arc (3) gezieration portion when arcwelding is conducted in the shielding gas (1a) in the welding torch (6).

An arc current is controlled by an arc current-voltage characteristic, which depends on a kind of a shielding gas (1a), and an external characteristic of a weld electric power source (7).

In the case where a different kind of a gas, which shows a higher arc voltage characteristic in a same arc length, is adopted as the different kind of a gas (2), an arc current is decreased with addition of the different kind of a gas (2) Since the welding wire (4) is supplied at a constant rate by the wire supply portion (5), a tip (4a) of the weld wire (4) descends to the side of a weld metal (8), i.e., a bottom of a groove (9a) of a base metal (9). When the addition of the different kind of a gas (2) is finished, the arc current increases and therefore the tip (4a) of the welding wire (4) ascends and returns to the position before addition of the different kind of a gas (2).

In the case where a different gas, which shows a lower arc voltage in a same arc length, is adopted as the different gas (2), a reverse phenomenon takes place.

As described in the above, in the present invention, an arc current is intermittently changed in proportion to an intermittent chemical composition change of the shielding gas (1a) at the arc (3) generation portion and an arc generation point, which is situated at the tip (4a) of the welding wire (4), is displaced upward or downward along the groove (9a) of the base metal (9). This up-and-down displacement of the arc generation point along the groove (9a) realizes effective are heat input density distributions in the groove (9a).

Namely, when the arc generation point is displaced at the bottom of the groove (9a) of the base metal (9), an are heat input condition is, for example, equal to a concentrated heat resource that is obtained by using 100% CO₂ for a shielding gas and sufficiently strong arc power against an excessively heavy gravity head of molten metal is kept. The bottom of the groove (9a) is stably molten by appropriate heat energy. Large heat input arc welding method so-called is unnecessary and excessive large heat input is avoided.

A condition where the tip (4a) of the welding wire (4) moves to the surface side of the groove (9a) is equal to one of the conditions of the MIG welding which is though to be effective with respect to beads. Consequently, the heat resource obtained is the same one as is dispersed by a cathode cleaning action in the MIG welding. Fine melting occurs and a wetting property at the toe of the beads is preserved.

In the present invention, heat input concentration and dispersion of the arc (3) in the groove (9a) of the base metal (9) can be controlled by the intermittent addition of the different kind of a gas (2), and effective and appropriate arc input distributions are realized in the groove (9). While avoiding excessive large heat input, base metal (9) melting can be obtained. In addition, heat density as a whole during welding can be reduced. A molten region and a heat affected zone can be also minimized. Accordingly, several properties of the base metal (9) cannot be harmed and a metallic structure can be stably preserved. Reduction of deformation and residual stress will be also possible.

In the present invention, a simple or composite of an inert gas such as a He gas or an Ar gas, or a composite gas in which such an inert gas is a main component and an oxidizing gas such as an O₂ gas or a CO₂ gas, or a N₂ gas is added can be adopted as a shielding gas (1). An amount of an additive gas can be within the range in the MIG or MAG welding, or can be beyond the range in the usual MAG welding. A simple or composite of such an oxidizing gas as O₂ or CO₂ can be adopted as the shielding gas (1).

A simple or composite gas which shows a higher or lower arc voltage in a same arc length than the shielding gas (1) is adopted as a different kind of a gas (2) in an arc current-voltage characteristic from the shielding gas (1). For example, in the case where a simple or composite of an inert gas or a composite gas which has an inert gas as a main component, a simple or composite of such an oxidizing gas as an O₂ gas or a CO₂ gas, or a N₂ gas, further, a composite gas in which these gasses are added to an inert gas in more amount as compared with a shielding gas to which those gasses are added. In the case where the shielding gas (1) is a simple or composite of such an oxidizing gas as an O₂ qas or a CO₂ gas, a simple or composite of such an inert gas as a He gas or an Ar gas, further, a composite gas in which an inert gas is a main component and an oxidizing gas such as an O₂ gas or a CO₂ gas, or a N₂ gas is added in less amount as compared with a shielding gas to which those gasses are added.

In the case where an oxidizing gas such as an O₂ gas or a CO₂ gas is used for the shielding gas (1) and the different kind of a gas (2), toughness deterioration of a weld metal (8) may be anxious. But, in the present invention, since the different kind of a gas (2) is intermittently added to the shielding gas (1), average gas pressure (gas concentration) of the oxidizing gas is sufficiently suppressed and therefore toughness deterioration of the weld metal (8) is prevented. Toughness of the weld metal (8) can be kept satisfactory.

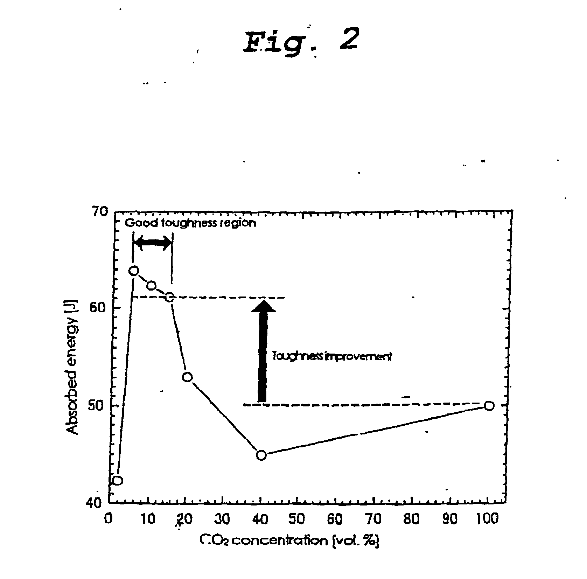

As is understood in Fig. 2, in the case of less than 20% of the CO₂ gas concentration, weld metal toughness is highly kept. Intermittent addition of the CO₂ gas, which realizes less than 20% of gas concentration, is realized by an operation in which a flow rate of the CO₂ gas is one-fourth of a flow rate of the Ar gas.

As illustrated in Fig. 1, a flow rate of the different kind of a gas (2) can be controlled by a flow control portion (10). The flow control portion (10) intermittently adds the different kind of a gas (2) to the shielding gas (1). In addition, the flow control portion (10) can watch a reducing valve and a flowmeter (11) which is provided at each of conduits of the shielding gas (1) and the different kind of a gas (2) and therefore the flow control portion (10) can also add the different gas (2) to the shielding gas (1) at appropriate flow rates.

It is preferable that the different gas (2) is partially added to a close portion to the tip (4a) of the welding wire (4) at which the arc (3) generation point is positioned. This is considered to be also important from the point of view that base metal (10) properties are stably preserved.

In the present invention, an external characteristic of the weld electric power source (7) can be changed by synchronizing with intermittent addition of the different kind of a gas (2) to the shielding gas (1) and thereby variation of an arc current can be increased or decreased. In accordance with the increase or decrease of the arc current variation, displacement amplitude of the arc generation point in the groove (9a) of the base metal (9) is expanded or reduced. Consequently, arc heat input density distributions in the groove (9a) is more appropriate.

For example, in the case where the external property of the weld electric power source (7) is a pulse voltage, when the pulse voltage change is synchronized with addition of the different kind of a gas (2), variation of an arc current can be increased or decreased by situating a peak of the pulse voltage during the addition of the different kind of a gas (2).

The means and manner for synchronizing the change of an external property of the weldpower source (7) the intermittent addition of the different kindof a gas (2) are not specifically restricted. For example, as shown in Fig. 1, the flow control portion (10) can be connected with the weld electric power source (7) through an interface (12). Control of the flow control portion (10) can synchronize with pulse conditions of the weld electric power source (7).

The following example does not form part of the invention but represents background art that is usefull for understanding the invention.

### (Example 1)

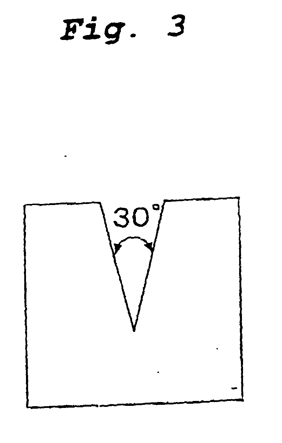

A CO₂ gas at a flow rate from 3 to 7 litters/min. as a different kind of a gas was intermittently added at an interval of 0.25 seconds to a shielding gas of an Ar simple gas at a flow rate of 20 litters/min. Welding was performed in a V-shape groove (mild steel), as illustrated in Fig. 3, with an angle of 30°. A usual electric power source with a constant voltage characteristic was used for a weld electric power source. The welding wire with diameter of 1.6 mm was used and its welding speed was 45 cm/min.

A contact tip is one of the parts, which is illustrated as a numeral, 13, in Fig. 1 and is provided in the welding torch (6). The position of the welding wire tip is illustrated as a symbol, Z, in Fig. 1.

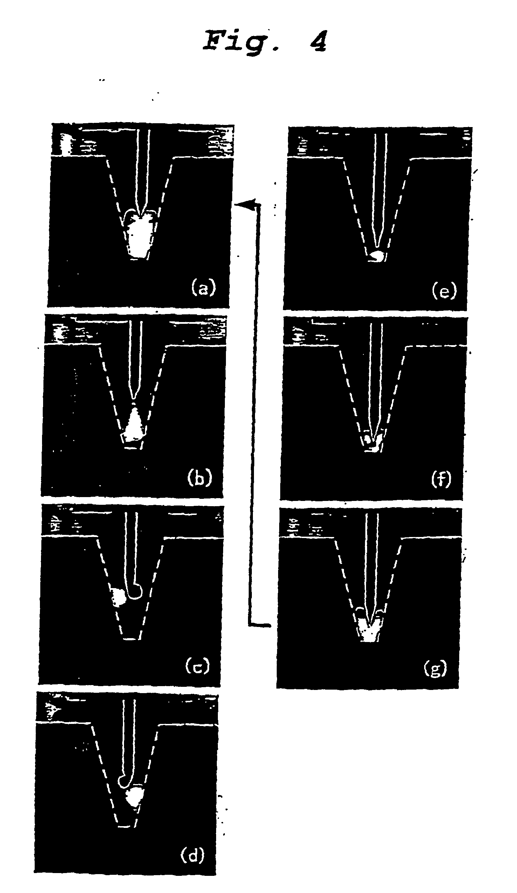

Fig. 4 (a) corresponds to a condition where welding was performed with only an Ar gas. No CO₂ gas was added to the shielding gas. An arc widely expands in the groove.

When adding a CO₂ gas to the shielding gas, a welding wire tip subsequently descends to a bottom of the groove in order from Fig. 4 (b) to (e). This phenomenon is based on a following theory.

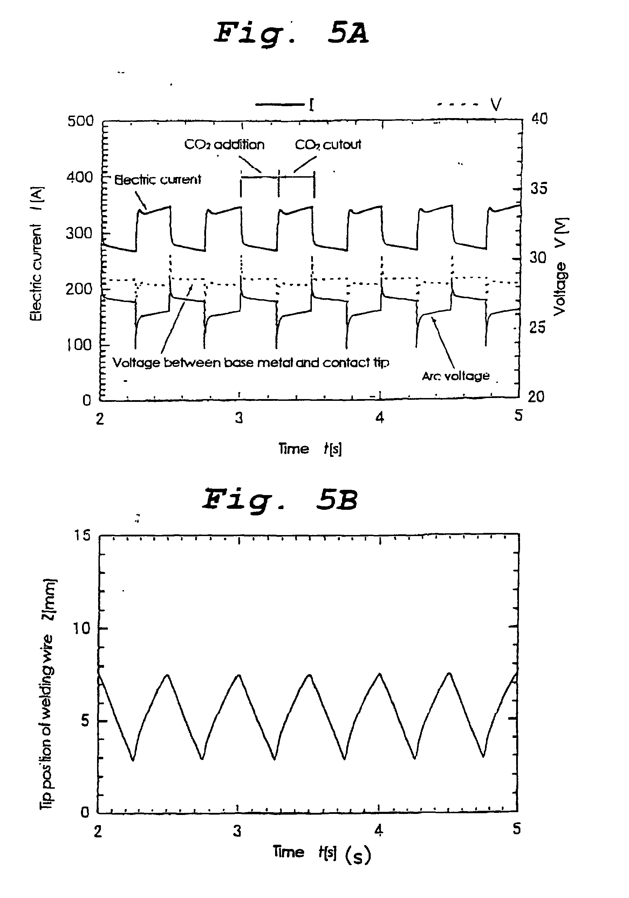

When the CO₂ gas is added to the shielding gas, as illustrated in Fig. 5A, an arc voltage is increased because the CO₂ gas is different in an arc current-voltage characteristic and shows a higher arc voltage in a same arc length than the Ar gas. Since a voltage is little changed in the electric power source with a constant voltage, the increase of the arc voltage causes voltage descent of the welding wire that is situated in the groove. The arc current decreases as illustrated in Fig. 5A. As a result, the molten amount of the welding wire decreases and, as confirmed in Fig. 5B, the welding wire tip descends.

As illustrated in Figs. 4 (c) and (d), the arc is generated at the shortest distance from one of the groove walls and a droplet moves to the opposite side of the arc under resiliency of the arc (Fig. 4 (c)). As a result, a distance between the droplet and the right side of the groove walls is shortest and the arc is generated at the right side of the groove walls. Accordingly, the droplet further moves to the opposite side of the are under resiliency of the ark (Fig. (d)). Since the movement is repeated, when the movement of the arc is seen as a whole, the arc is uniformly distributed in the groove and therefore one side melting does not occur and groove walls are satisfactorily molten.

When the CO₂ gas is cut out, as illustrated in Fig. 4 (f), the arc is widely generated at the bottom of the groove because the shielding gas is only the Ar gas. As illustrated in Fig. 5A, the arc current increases according to the descent of the arc voltage and the welding wire tip subsequently goes up in order of Figs. 4 (t), (g) and (a). This is also confirmed in Fig. 5B. when the welding wire tip goes back to the initial position as illustrated in Fig. 4 (a), concave beads with a sufficient wetting property are formed. This is based on a cathode cleaning action and is because the arc is generated over the initial arc generation point as illustrated in Fig. 4 (a).

As described in the above, concentration and dispersion of the arc heat input in the groove were controlled by intermittent addition of the different kind of a gas, and effective and appropriate arc heat input distributions in the groove were realized. Melting in the groove was sufficiently preserved and a heat density as a whole during welding was decreased. FurLher, a molten region and a heat affected zone were minimized. In addition, average gas pressure (gas concentration) of the CO₂ gas could be sufficiently suppressed and weld metal toughness could be kept satisfactory. Examples of a consumable electrode gas shielded are welding method and apparatus will be described in the following examples.

### (Examples 2)

A constant voltage chat acteris tic varying no-load voltage like a pulse was selected as an external property of a weld electric power source. As is similar to Example 1, welding was performed while the constant voltage characteristic was changed by synchronizing with CO₂ addition. The arc currents and the positions of the welding wire tip were compared with those in Example 1 in which a voltage characteristic of the weld power source was not changed. The results are shown in graphs of Figs. 6A, 6B and 6C.

Fig. 6A shows voltages of a weld electric power source, arc voltages, arc currents, positions of a welding wire tip and electric power input expressed (electric current) × (voltage) during the direct current arc welding in which welding was performed with no change of voltage of the weld electric power source. Fig. 6B shows voltages of a weld electric power source, arc voltages, arc currents, positions of a welding wire tip and electric power input during welding in which a voltage characteristic of a weld electric power source was a pulse voltage with a cycle of 0.25 seconds, which was as same as the cycle of a CO₂ gas addition, and the voltage characteristic was changed by synchronizing with the CO₂ gas addition and corresponding with the addition cycle. Fig. 6C shows voltages of a weld electric power source, arc voltages, arc currents, positions of a welding wire tip and electric power input during welding in which a voltage characteristic of a weld electric power source was a pulse voltage with a cycle of 0.25 seconds, which was as same as the cycle of a CO₂ gas addition, and the voltage characteristic was changed by synchronizing with the CO₂ gas addition and, on the other hand, by giving a pulse cycle a phase shift of 0.125 seconds against the CO₂ gas addition cycle.

As confirmed in comparison of Figs. 6A to 6C, in the case where a voltage pulse cycle of the weld electric power source was corresponded with the CO₂ gas addition cycle (Fig. 6B), i.e., the CO₂ gas was added at the peak of the voltage pulse, the highest position of the welding wire tip in the groove moved to the bottom of the groove, but variation of the welding wire tip decreases as compared with the direct arc welding (Fig. 6A). When the CO₂ gas was cut out, the welding wire tip moved to an upper portion of the groove and the electric power input expressed (electric current) × (voltage) was not effectively entered the bottom of the groove.

On the other hand, in the case where the voltage pulse of the welding electric power source was changed by synchronizing with CO₂ gas addition and a prescribed phase shift was given to the pulse cycle (Fig. 6C), both the highest position and the Jowest position of the welding wire tip in the groove moved to the bottom of the groove as compared with the direct current arc welding (Fig. 6A) and displacement amplitude (ΔZ) was maximized. When the welding wire tip was situated at the bottomof the groove at around 3.5 to 3.7 seconds, the electric power input was larger than that in the case of Figs. 6A and 6B. Heat effectively entered the bottom of the groove and penetration of the bottom was kept.

From these facts, it is understood that displacement amplitude of the arc generation point in the groove can be expanded by changing an external property of a weld electric power source while synchronizing with intermittent addition of a different kind of a gas to a shielding gas and by increasing variation of an arc current. Accordingly, appropriate arc heat input density distributions in the groove can be obtained.

It is of course that the present invention is not limited to embodiments and examples above-mentioned. Various modifications are possible within the scope of the appended claim 1.

## Claims

1. A consumable electrode gas shielded arc welding method, comprising the steps of intermittently adding a different kind of a gas (2) in an arc current-voltage characteristic from a shielding gas (1) to said shielding gas; intermittently changing an arc current in proportion to an intermittent chemical composition change of the shielding gas (1a) at an arc (3) generation region; and displacing along a groove (9a) an arc generation point situated at a tip (4a) of a welding wire (4) defined by a base metal (9), toward and away from a bottom of said groove (9a); **characterised in that** the variation of said arc current is increased or decreased by changing an external characteristic of a weld electrical power source (7) in synchronization with the intermittent addition of said different kind of a gas to said shielding gas, thereby increasing or decreasing a displacement amplitude of said arc generation point in said groove.

2. The method as claimed in claim 1, wherein the shielding gas or said different kind of a gas is an oxidizing gas or a He gas.

3. A consumable electrode gas shielded arc welding apparatus, comprising a welding torch (6); a wire supply portion (5) continuously supplying a welding wire (4) to said welding torch; a shielding gas supply portion supplying a shielding gas (1) to said welding torch; a weld electric power source (7); and a different kind of a gas supply portion which intermittently adds a different kind of a gas (2) in an arc current-voltage characteristic from said shielding gas to the shielding gas; **characterised in that** an interface (12) is provided between said weld electric power source and a flow control portion (10) for said different kind of gas which is capable of synchronizing a change in an external characteristic of said weld electric power source with the intermittent addition of said different kind of gas, which in turn increases or decreases the variation of an arc current and increases or decreases a displacement amplitude of an arc generation point, situated at a tip (4a) of said welding wire, when welding in a groove (9a).

## Patentansprüche

1. Verfahren zum Lichtbogenschutzgasschweißen unter Verwendung einer abschmelzenden Elektrode mit den Verfahrensschritten:
intermittierendes Zufügen einer anderen Gasart (2) mit einer Lichtbogen-Strom-Spannungs-Charakteristik eines Schutzgases (1) zu dem Schutzgas,
intermittierendes Ändern eines Lichtbogenstromes proportional zu einer intermittierenden Änderung der chemischen Zusammensetzung des Schutzgases (1a) in einer Region eines Lichtbogens und
Verschieben eines Lichtbogenpunktes an einer Spitze (4a) eines Schweißdrahtes (4) definiert durch ein Grundmaterial (9) entlang einer Nut (9a) in Richtung auf den Boden der Nut (9a) und von dieser fort, **dadurch gekennzeichnet,**
**dass** die Variation des Lichtbogenstromes durch Ändern der externen Charakteristik einer elektrischen Schweißstromquelle (7) synchron mit dem intermittierenden Zusatz der anderen Gasart zu dem Schutzgas erhöht oder erniedrigt wird, wodurch eine Verschiebungsamplitude des Lichtbogenpunktes in der Nut erhöht oder erniedrigt wird.

2. Verfahren nach Anspruch 1, **dadurch gekennzeichnet, dass** das Schutzgas oder die andere Gasart ein oxidierendes Gas oder ein Heliumgas ist.

3. Vorrichtung zum Lichtbogenschutzgasschweißen unter Verwendung einer abschmelzenden Elektrode mit einem Schweißbrenner (6), einem Drahtzuführabschnitt (5) zum kontinuierlichen Zuführen eines Schweißdrahtes (4) zum Schweißbrenner, einem Schutzgaszuführabschnitt zum Zuführen eines Schutzgases (1) zum Schweißbrenner, einer elektrischen Schweißstromquelle (7) und einer anderen Art eines Schutzgaszuführabschnittes zum intermittierenden Zusetzen einer anderen Gasart (2) mit einer Lichtbogen-Strom-Spannungs-Charakteristik eines Schutzgases zu dem Schutzgas, **dadurch gekennzeichnet,**
**dass** zwischen der elektrischen Schweißstromquelle und einem Flußsteuerabschnitt (10) für die andere Gasart eine Schnittstelle (12) vorgesehen ist, die in der Lage ist, eine Änderung der externen Charakteristik der elektrischen Schweißstromquelle mit dem intermittierenden Zusatz der anderen Gasart zu synchronisieren, wodurch die Variation eines Lichtbogenstromes erhöht oder erniedrigt und eine Verschiebungsamplitude des Lichtbogenpunktes erhöht oder erniedrigt wird, der an der Spitze (4a) des Schweißdrahtes entsteht, wenn dieser in einer Nut (9a) einen Schweißvorgang durchführt.

## Revendications

1. Procédé de soudage à l'arc sous protection gazeuse avec électrode fusible, comprenant les étapes d'ajout intermittent d'un type différent de gaz (2) dans une caractéristique courant-tension d'arc d'un gaz protecteur (1) audit gaz protecteur ; changement intermittent d'un courant d'arc proportionnel à un changement de composition chimique intermittent du gaz protecteur (1a) au niveau d'une région de génération d'arc (3) ; et déplacement le long d'une rainure (9a) d'un point de génération d'arc situé à une extrémité (4a) d'un fil à souder (4) défini par un métal de base (9), vers et depuis le fond de ladite rainure (9a) ; **caractérisé en ce que** la variation dudit courant d'arc est augmentée ou diminuée en modifiant une caractéristique externe d'une source d'alimentation électrique de soudure (7) en synchronisation avec l'ajout intermittent dudit type différent de gaz audit gaz protecteur, de manière à augmenter ou diminuer une amplitude de déplacement dudit point de génération d'arc dans ladite rainure.

2. Procédé selon la revendication 1, dans lequel le gaz protecteur dudit type différent de gaz est un gaz oxydant ou un gaz de He.

3. Appareil de soudage à l'arc sous protection gazeuse avec électrode fusible, comprenant un chalumeau soudeur (6) ; une partie d'alimentation de fil (5) délivrant en continu un fil à souder (4) audit chalumeau soudeur ; une partie d'alimentation de gaz protecteur délivrant un gaz protecteur (1) audit chalumeau soudeur ; une source d'alimentation électrique de soudure (7) ; et une partie d'alimentation de type différent de gaz qui ajoute de manière intermittente un type différent de gaz (2) dans une caractéristique de courant-tension d'arc dudit gaz protecteur au gaz protecteur ;
**caractérisé en ce qu'**une interface (12) est disposée entre ladite source d'alimentation électrique de soudure et une partie de commande de débit (10) pour ledit type différent de gaz qui est capable de synchroniser un changement de la caractéristique externe de ladite source d'alimentation électrique de soudure avec l'ajout intermittent dudit type différent de gaz, qui augmente ou diminue la variation d'un courant d'arc et augmente ou diminue une amplitude de déplacement d'un point de génération d'arc, situé à une extrémité (4a) dudit fil à souder, lors d'un soudage dans une rainure (9a).
